(19) Europäisches Patentamt

European Patent Office

Office européen des brevets

(11) **EP 4 782 393 A1**

(12) **EUROPEAN PATENT APPLICATION**

(43) Date of publication:
29.07.2026 Bulletin 2026/31

(21) Application number: 25154336.9

(22) Date of filing: 28.01.2025

(51) International Patent Classification (IPC):
*C01B 3/24* (2006.01)

(52) Cooperative Patent Classification (CPC):
**C01B 3/24; B01J 19/088; C01B 32/184; C01B 32/205**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(71) Applicant: **Uniper Energy Storage GmbH**
**40219 Düsseldorf (DE)**

(72) Inventors:
- **Uhlenbruck, Neele**
**40479 Düsseldorf (DE)**
- **Jaerschel, Daniel**
**40221 Düsseldorf (DE)**

(74) Representative: **Ter Meer Steinmeister & Partner Patentanwälte mbB**
**Nymphenburger Straße 4**
**80335 München (DE)**

(54) **PLASMA PROCESS AND DEVICE FOR THE PRODUCTION OF HYDROGEN AND HIGH VALUE CARBON**

(57) The present invention relates to a process for the production of hydrogen gas and a solid carbon product selected from the group consisting of graphene, graphite and mixtures thereof. The process comprises the steps of feeding an educt gas into a plasma section of a reactor in a direction different from the longitudinal axis of the reactor, converting the educt gas into a plasma having a temperature of more than 3,000 K by flowing the educt gas through an electric arc discharge, quenching the plasma and/or gas obtained from the plasma with a cooling rate of more than 1,000 K/s from a temperature of more than 3,000 K to a temperature of below 3,000 K. The educt gas comprises $CH_4$ and has an atomic H/C ratio of $\geq 4.0$. The invention furthermore provides a device for the production of hydrogen gas and a solid carbon product selected from the group consisting of graphene, graphite and mixtures thereof or for the production of hydrogen gas and a modified solid carbon product selected from the group consisting of doped graphene, doped graphite and mixtures thereof.

Figure 1

## Description

The present invention relates to a process for the production of hydrogen gas and a solid carbon product selected from the group consisting of graphene, graphite and mixtures thereof. The process comprises the steps of feeding an educt gas into a plasma section of a reactor in a direction different from the longitudinal axis of the reactor, converting the educt gas into a plasma having a temperature of more than 3,000 K by flowing the educt gas through an electric arc discharge, quenching the plasma and/or gas obtained from the plasma with a cooling rate of more than 1,000 K/s from a temperature of more than 3,000 K to a temperature of below 3,000 K. The educt gas comprises $CH_4$ and has an atomic H/C ratio of $\geq 4.0$. The invention furthermore provides a device for the production of hydrogen gas and a solid carbon product selected from the group consisting of graphene, graphite and mixtures thereof or for the production of hydrogen gas and a modified solid carbon product selected from the group consisting of doped graphene, doped graphite and mixtures thereof.

## Technical Background

Hydrogen has an important role in transitioning global energy systems from fossil fuels to clean and sustainable supplies. According to the Innovation Insights Brief from the World Energy Council, 96% of hydrogen have been produced from fossil fuels either through steam methane reforming of natural gas (referred to as "grey" hydrogen) or from coal gasification (referred to as "brown" hydrogen) in 2019. Consequently, the hydrogen production was - and still is - responsible for the emission of millions of tons of carbon dioxide per year.

Hydrogen referred to as "turquoise" hydrogen, which is obtained by decarbonizing natural gas in a thermal plasma pyrolysis process, is a potential game changer. Depending on the kind of energy that is used for powering the process, turquoise hydrogen may have a very low carbon intensity, such as 0.91 kgCO2e/kg (cf. Diab et al. "Why Turquoise Hydrogen will be a game changer for the energy transition", International Journal of Hydrogen Energy, Volume 47, Issue 61, 2022). Processes and devices for producing turquoise hydrogen with a potentially low carbon footprint are, for example, known from EP 3 718 964 A and WO 2015/189643 A1. The process and device in the former make use of an electrical arc discharge to generate plasma, whereas the latter describes a process and device in which plasma is generated through radio frequency radiation.

However, although devices and processes for its production are known, there are still heavy catches to turquoise hydrogen. One problem is that carbon black is obtained as a co-product of turquoise hydrogen.

Compared to graphene and graphite, carbon black is a rather low value carbon product.

Articles that are produced with carbon black, like tires, rubber plastics, toners, paints and textile fibers, are functional and show acceptable properties. Yet, if graphene could be used instead of carbon black, the overall performance of many of these articles could be considerably improved.

Substituting carbon black by graphene is, however, no option at the moment since there is currently no established process for producing graphene on a large scale. In fact, most of the commercially available, substrate-free graphene is currently produced from synthetic graphite which, in turn, is obtained from fossil resources and the production of which is consequently linked to high emissions.

Thus, there is a need for developing a low-emission process and device for the production of hydrogen gas and a solid carbon product selected from the group consisting of graphene, graphite and mixtures thereof. Alternatively, it may be said that there is a need for improving known processes for producing turquoise hydrogen. in such a way that less carbon black is generated as a co-product.

## Summary of the Invention

The above identified need is satisfied by the device according to independent claim 1, the process according to independent claim 8 and the process according to independent claim 9. Advantageous embodiments may be derived from the dependent claims.

## Detailed Description of the Embodiments

The present invention provides a device for the production of hydrogen gas and a solid carbon product selected from the group consisting of graphene, graphite and mixtures thereof, wherein the device comprises a reactor having a plasma section, wherein the plasma section comprises at least one inlet for gas that extends into a direction different from the longitudinal axis of the reactor, and wherein the plasma section further comprises at least two hollow electrodes configured to receive a direct electric current and generate an electric arc discharge between them, and a quenching means downstream from the plasma section, wherein the quenching means is configured to cool a plasma and/or gas from a temperature of more than 3,000 K with a cooling rate of more than 1,000 K/s to a temperature of below 3,000 K.

The device according to the present invention may be a device for the production of hydrogen gas and a solid carbon product selected from the group consisting of graphene, graphite and mixtures thereof, wherein the device comprises a reactor having

i) a plasma section, wherein the plasma section comprises at least one inlet for gas that extends into a direction different from the longitudinal axis of the reactor, and wherein the plasma section further comprises at least two hollow electrodes configured to receive a direct electric current and generate an electric arc discharge between them, and

ii) a quenching means downstream from the plasma section, wherein the quenching means is configured to cool a plasma and/or gas from a temperature of more than 3,000 K with a cooling rate of more than 1,000 K/s to a temperature of below 3,000 K,

and wherein the device further comprises a separation apparatus downstream of the reactor, wherein the separation apparatus is configured to separate a solid carbon product from a hydrogen gas.

The solid carbon product preferably is a substrate-free solid carbon product. Furthermore, the solid carbon product that can be produced by means of the above device is selected from the group consisting of graphene, graphite and mixtures thereof and, thus, is a high value carbon product. It is of a high value compared to carbon black which is the solid carbon product that can be produced with the usual devices. The prices that are scored by these solid carbon products on the market may serve as an indicator of the high value of the carbon product. High-purity graphite powder for battery applications is currently traded for several hundred euros per 100 g. The price for 1 g of graphene is currently around $100 to $400.

The reason for the high graphene price, in addition to the excellent properties of the material in many applications, is its conventional manufacturing process, which does not allow large-scale synthesis. Moreover, graphene can be used in many applications, and its properties as an additive often significantly exceed those of conventionally used materials, such as carbon black. The beneficial properties of graphene are due, among other things, to its two-dimensional structure, which results in a very large specific surface area. As a result, significantly smaller quantities are often sufficient to achieve the same or even better effect compared to conventional materials. This may save weight, material and $CO_2$ emissions, for example in concrete production. As well as being used in electrodes for energy storage systems, graphene can also be used to produce conductive composite materials. Effective heat and noise insulation can also be achieved, as can electrically conductive coatings that protect against corrosion and abrasion. By combining these properties, these coatings could also be used to protect the rotor blades of wind turbines and for lightning protection. Graphene can also be used to produce fire-retardant materials or materials that shield electromagnetic radiation. Due to its high electrical conductivity and high transparency, graphene is also of great interest as an electrode material for photovoltaic systems. The fields of application therefore include the aerospace industry, the automotive industry, the polymer and rubber industry, the battery industry, energy generation and storage and many other fields.

In the context of the present invention, the term "graphene" should not be understood as being limited to single-layer graphene. Graphene according to the present invention also comprises graphene with 2-10 layers. In contrast to that, a solid carbon product with more than 10 layers may be referred to as "graphite".

From a structural point of view, the device comprises a reactor having a plasma section. In other words, the plasma section is part of the reactor. The plasma section comprises at least two hollow electrodes configured to receive a direct electric current and generate an electric arc discharge between them. Preferably, the plasma section comprises two hollow electrodes, in particular a hollow anode and a hollow cathode, configured to receive a direct electric current and generate an electric arc discharge, wherein the electric arc discharge preferably extends within the plasma section. The electric arc is configured to convert a fluid, that is introduced via the gas inlet into the plasma section, into a plasma. The fluid, which may be a gas, which is introduced via the gas inlet may consist of one or more compounds. In a preferred embodiment, the fluid comprises $CH_4$ and optionally hydrogen. Further preferably, the fluid has an atomic H/C ratio of $\geq 4.0$. In the plasma state, several reactions of the one or more compounds are triggered. Due to the high temperatures in the plasma state, the reactions include formation of ions and radicals. The plasma is thus rich of ionized particles and/or radicals derived from the one or more compounds.

In this context, it is pointed out that the term "plasma" relates to a specific state of matter. Besides solid, liquid and gas, there is a state of matter which is called "plasma". Preferably, the term "plasma" in the present application relates to a "thermal plasma". A gas which is merely intended to be introduced and/or treated in a reactor configured to generate a thermal plasma by means of an electric arc discharge, but which is not or not yet present in a plasma state does not fall under the definition of a plasma. A gas which exits a plasma section of reactor may no longer be present in a plasma state and does then, likewise, not fall under the definition of a plasma. According to A. Fridman (Plasma Chemistry, Cambridge University Press, 2009), a plasma is generally defined as an ionized gas, i.e. a gas containing at least one electron which is not bound to an atom or molecule, converting the atoms or molecules into positively charged ions. Preferably, a plasma contains electrically charged particles in an amount which is sufficient to affect and change its electrical properties and behavior relative to the normal gas state. An example of an electrical property is the electrical conductivity. The electrical conductivity is increased in a thermal plasma compared to a gas. Conceptually, the correlation of the electrical conductivity with the plasma state and the temperature may be explained as follows: It is known that the degree of ionization increases with temperature (for example shown by tabulated data for hydrogen, nitrogen, oxygen, air and selected noble gases in M. I. Boulos, Thermal Plasmas, Fundamentals and Applications, Vol. 1 , 1994). Due to the enhanced mobility of opposite charges, an increased degree of ionization comes along with an increased electrical conductivity.

Moreover, a plasma in the sense of the current invention is preferably characterized by the fact that the electrical conductivity of the plasma at a given density is at least 1 order of magnitude, preferably 2 orders of magnitude, even more preferably 4 orders of magnitude higher than the electrical conductivity of the corresponding gas at room temperature and the same density. The skilled person can measure the electrical conductivity by a technique which is analogous to the flame ionization detection method.

A plasma is preferably created by the use of electrical energy, for example by subj ecting a gas to a strong electromagnetic field, for example an electromagnetic field which is generated in the surrounding of an electric arc discharge.

The reactor in the device of the present invention comprises a quenching means in downstream from the plasma section. The plasma section may also be referred to as the "first reactor section", while the section downstream from the plasma section may be referred to as the "second reactor section". The downstream direction may be equated to the direction of the main stream of the fluid and/or plasma through the reactor. The main stream preferably flows in a direction from the inlet for gas to the outlet of the reactor.

A quenching means downstream from the plasma section may be a quenching means arranged at a position along the length of the reactor where nucleation of small carbon clusters has already taken place and growth of these clusters into graphene particles is ongoing or completed. The reactor length along which nucleation and growth take place can be estimated based on the temperature or temperature profile. The end of the plasma section may be defined as the location of the second foot point of the electric arc discharge along the downstream direction.

In a preferred embodiment, the inlet for gas in the plasma section of the reactor is a tangential inlet. A tangential inlet preferably is an inlet extending into a direction different from a radial direction of the reactor. The use of a tangential inlet ensures a fluid flow that is beneficial in view of the desired reactions and reaction products. Without wishing to be bound by theory, it is assumed based on Computational Fluid Dynamic (CFD) simulations, that a vortex is formed around the longitudinal axis of the reactor by feeding fluid through the tangential inlet. A part of the introduced fluid stream follows the tangential direction and adopts an upstream rotational flow in proximity to the reactor wall. The linear movement of this part of the fluid stream along the longitudinal axis of the reactor reverses at the upstream end of the reactor, usually the end where the hollow cathode is arranged. After the linear movement has been reversed, the fluid stream is centered with respect to the hollow cathode and then continues to flow at a high speed through the hollow anode and to the downstream end of the reactor. Another second part of the introduced fluid stream follows the tangential direction and adopts a downstream rotational flow in proximity to the reactor wall. This second part of the fluid stream overlaps with the first part of the fluid stream. The electric arc discharge results in temperatures of more than 3,000 K, more preferably to temperature from 3,000 to 10,000 K, in particular from 3,000 to 7,000 K. The foot points of the electric arc discharge may be moving on the surfaces of the electrodes due to the rotation of the fluid streams. It is further believed that the strong heating, that particularly occurs near the longitudinal axis and in the center of the reactor increases the longitudinal velocity of the fluid stream far above its tangential velocity.

It is, furthermore, preferred that there is a spacing between the hollow electrodes in the plasma section. The spacing may be a gap or filled with a highly insulating material. Preferably the spacing is a gap and the at least one gas inlet is arranged in this gap. The at least one gas inlet arranged in the gap between the electrodes may be a vortex ring with a plurality of inlet slots for educt gas, for example a vortex ring as described in EP 0 104 359 A. At least one further gas inlet may be arranged at a position upstream of both electrodes. In other words, at least one further gas inlet may be positioned at the upstream end of the reactor. In this case, the at least one further gas inlet at the upstream end of the reactor may be a vortex ring with a single inlet slot for educt gas.

The quenching means may comprise or consist of a heat exchanger configured to cool a plasma and/or gas rapidly, *i.e.* configured to cool a plasma and/or gas from a temperature of more than 3,000 K with a cooling rate of more than 1,000 K/s to a temperature of below 3,000 K. An example of such a heat exchanger is a transfer line exchanger (available for example from BORSIG). A heat exchanger configured to cool a plasma and/or gas rapidly is preferably operated with a cooling fluid, which has a high heat capacity and heat conductivity. Preferably, the cooling fluid is water so that either steam or hot water are generated as a by-product of the quenching process. To increase the energy efficiency of the overall process, steam may be used to generate electricity, while hot water may be used for district heating.

Alternatively or in addition the quenching means may comprise or consist of one or more inlets for gas. When the quenching means comprises or consists of two or more inlets for gas, the two or more inlets for gas are arranged on a circumference along the same length of the reactor. This ensures that rapid cooling, *i.e.* quenching, only takes place once along one fixed length of the reactor. Subsequent or stepwise quenching of the gas is assumed to result in undesirable by-products and may account for increased amounts of carbon black, which is believed to be a low value carbon product. In one embodiment, the quenching means are configured to quench a plasma and/or gas with a cooling rate of more than 5,000 K/s from a temperature of more than 4,000 K to a temperature of below 3,000 K, such as a temperature of below 1,500 K, for example a temperature from 900 K to 1,200 K. Preferably the quenching means are configured to quench a plasma and/or gas with a cooling rate of from 5,000 K/s to 20,000 K/s from a temperature in a range of 4,000 K and 6,000 K to a temperature of below 3,000 K, such as a temperature of below 1,500 K, for example a temperature from 600 K to 1,200 K, in particular by feeding cold hydrogen.

In addition to the quenching means, the reactor may further comprise cooling means which are arranged downstream from the quenching means. The cooling means may be a heat exchanger configured to cool a gas moderately fast, i.e. configured to cool a gas with a cooling rate of less than 1,000 K/s. Furthermore, the cooling means may be configured to adjust the temperature of a gas in the reactor to a range from 300 K to 500 K.

The cross section of the reactor is preferably constant, tapering and/or expanding between the end of the plasma section and the downstream end of the reactor, i.e. in the second reactor section. The downstream end of the reactor refers to the end of the reactor having an outlet. In a case in which the cross section is tapering and/or expanding, the cross section is preferably continuously tapering and/or expanding. In other words, the cross section should not comprise stepped portions. Worded differently, sudden expansions of the cross section of the reactor should be avoided. By avoiding stepped portions and sudden cross section expansions, the phenomenon of back-mixing is reduced and a narrow residence time distribution is achieved. A narrow residence time distribution in the context of the present invention is understood to be close to an ideal plug flow and can be measured as outlined below. Alternatively, a narrow residence time distribution can be characterized by a Bodenstein number $Bo$ of more than 80 which is determined as outlined below.

The residence time distribution, average residence time and Bodenstein number can be derived based on computational models, such as computational fluid dynamics (CFD). Alternatively, residence time distribution, average residence time and Bodenstein number can be measured in stimulus-response-experiments with a tracer compound.

When conducting stimulus-response-experiments, the following assumptions and theories can be used to derive the desired quantities.

Firstly, if a pulse is used as stimulus, a small amount of tracer is instantaneously introduced into the main stream of the fluid with volumetric rate $V$ and the tracer concentration $c_{tracer}$ at the outlet of the reactor is measured with time t. The area under the curve equals the term $m_{tracer}/\dot{V}$ as is evident from equation (1) below:

$$A = \int_0^\infty c_{tracer} dt = m_{tracer} \dot{V} \qquad (1).$$

Different fluid elements may take different pathways through the reactor and, therefore, need a different time to arrive at the outlet of the reactor. The distribution of these times is the age distribution E which follows equation (2) and which is found by dividing the actual tracer concentration $c_{tracer}$ at the outlet by $m_{tracer}/\dot{V}$:

$$E = \frac{c_{tracer} \dot{V}}{m_{tracer}} \qquad (2).$$

Based on the dimensionless time $\theta = t/\tau$ , a dimensionless age distribution $E_\theta$ at the outlet may be obtained according to equation (3):

$$E_\theta = \tau E = V_R \dot{V} \frac{c_{tracer} \dot{V}}{m_{tracer}} = \frac{V_R c_{tracer}}{m_{tracer}} \qquad (3).$$

Secondly, according to the so-called dispersion model, if a pulse is used as stimulus, and it is assumed that the mixing processes along the longitudinal axis of the reactor are driven by the concentration gradient, the response function can be anticipated from the following mass balance equation (4):

$$\frac{\partial c_{tracer}}{\partial t} = D_{ax} \frac{\partial^2 c_{tracer}}{\partial l^2} - u \frac{\partial c_{tracer}}{\partial l} \qquad (4)$$

where $l$ is a position along the reactor length $L$, $u$ is the velocity and $D_{ax}$ is the ratio of the convective flux to the diffusion (dispersed) flux. Applying the dimensionless time $\theta = t/\tau$ to equation (4), and assuming that $Z = l/L$ the following expression according to equation (5) can be obtained:

$$\frac{\partial c}{\partial \theta} = \frac{D_{ax}}{u \cdot l} \frac{\partial^2 c_{tracer}}{\partial Z^2} - \frac{\partial c_{tracer}}{\partial Z} = \frac{1}{Bo} \frac{\partial^2 c_{tracer}}{\partial Z^2} - \frac{\partial c_{tracer}}{\partial Z} \qquad (5)$$

which includes the Bodenstein number $Bo$, that corresponds to the reciprocal value of $D_{ax}/uL$.

The quenching means may be configured to cool a plasma and/or gas from a temperature of more than 4,000 K, preferably from a temperature in a range of from 4,000 K to 6,000 K, with a cooling rate of more than 5,000 K/s, preferably with a cooling rate from 5,000 K/s to 20,000 K/s. Due to the quenching the plasma may be at least partially converted into a fluid, such as a gas. The high cooling rates during quenching ensure that the amount of undesirable by-products such as carbon black is zero or at least reduced.

Together with the at least one inlet for gas, the at least two hollow electrodes may be said to form or constitute a plasma torch. The at least two hollow electrodes are electrodes that may be made of a material selected from the group consisting of metal, metal alloy, electrically conductive ceramic, carbon, such as graphite, and mixtures thereof. As a material for the hollow anode a material selected from the group consisting of graphite, copper and/or a tungsten-copper alloy (WCu) is preferred. Among the aforementioned materials, copper may be more preferred since it has heat dissipation properties which are better than those of graphite. Furthermore, the copper may be an oxide dispersion strengthened copper (ODS copper),

The oxide dispersion strengthened copper may be composed of a matrix of pure copper containing very finely dispersed aluminum oxide ($Al_2O_3$) nanoparticles, which strengthen the copper and increase its hardness. The thermally stable $Al_2O_3$ particles stabilize the microstructure and the grain boundaries up to very high temperatures. Recrystallization is prevented, softening does not occur and the components retain their original shape and strength even after exposure to high temperatures. An example for such an oxide dispersion strengthened copper is CUPALOX®.

A tungsten-copper alloy can be obtained by pressing and sintering tungsten powder and sealing the pores of the sintered body by liquid copper infiltration. Depending on the grain size of the tungsten powder and the pressing and sintering parameters, a different content of tungsten or copper can be set. The tungsten-copper alloy combines many typical properties of the individual elements, such as hardness, wear and erosion resistance of tungsten and electrical and thermal conductivity of copper. It is preferred to be used as an electrode material when typical copper materials have reached their have reached their performance limit.

The hollow cathode may be made of a material with a low electron work function. For example, the material of the hollow cathode may be selected from tungsten-lanthanum alloys, lanthanum-oxide doped tungsten, lanthanum hex-aboride ($LaB_6$) and mixtures thereof.

The use of lanthanum-oxide doped tungsten is known to be competitive with thoria-doped tungsten, which is avoided due to its radioactive potential (cf. Heiβl et al."Substitution of ThO2 by La2O3 additions in tungsten electrodes for atmospheric plasma spraying", International Journal of Refractory Metals and Hard Materials, 43, 2014, pp. 181-185).

Lanthanum hexaboride is known as a highly efficient electron emissive material for cathodes in cold plasma arc applications. Its unique physical and chemical properties make it an ideal choice for generating and sustaining electron flow in demanding environments. $LaB_6$ has a work function of approximately 2.5 eV, which enables efficient electron emission under lower electric fields compared to other materials. Due to a high melting point of 2210 °C and a high structural integrity and electron emissivity under high temperatures, it is also very well suited for cathodes in thermal plasma where localized heating occurs. $LaB_6$ exhibits strong thermionic and field emission properties, ensuring consistent electron emission even under harsh operating conditions.

The hollow electrodes are configured to receive a direct current. In preferred embodiments, the direct current is stabilized by means of an electromagnetic coil, *i.e.* a solenoid coil. The solenoid coil may be arranged around the outer reactor wall. It is especially advantageous to arrange the solenoid coil at a position overlapping with or being equal to the position of the hollow cathode. In this way, when operating the process and the solenoid coil, a rotation can be imparted to the foot point of the electric arc discharge on the inner surface of the hollow cathode. The rotational movement may serve to protect the hollow cathode from erosion. The rotational movement of the foot point of the electric arc discharge is further promoted by the vortex which is formed around the longitudinal axis of the reactor by feeding fluid through the tangential inlet of the reactor. At the same time, the solenoid coil serves to limit the axial movement of the foot points of the electric arc and thereby stabilizes the voltage. Details with respect to the rotational movement and behavior of the electric arc discharge have been studied and can be taken from Chau et al. "Experimental study on copper cathode erosion rate and rotational velocity of magnetically driven arcs in a well-type cathode non-transferred plasma torch operating in air", Journal of Physics D: Applied Physics, vol. 40, 7, 2007, pp. 1944-1952. Furthermore, to avoid damages from high temperatures, the two hollow electrodes may be configured to be cooled by demineralized water. In other words, when a cooling device is coupled to the two hollow electrodes, it is preferred that the cooling device is configured to receive demineralized water as a cooling medium. Alternatively, the two hollow electrodes may be configured to be cooled by thermal oil or liquid metal coolant. It is further preferred that the cooling device is configured to cool the electrodes to a temperature of less than 600 °C, preferably to a temperature of less than 500 °C, more preferably to a temperature of less than 400 °C, in particular to a temperature of from 200 to 350°C.

In other embodiments, the device may be connected to a power grid configured to provide power from renewable energy sources. This may further improve the carbon footprint of processes conducted in the device, such as processes for the production of hydrogen gas.

The device according to the present invention comprises a separation apparatus downstream of the reactor, wherein the separation apparatus is configured to separate a solid carbon product from a hydrogen gas. The separated hydrogen gas, *i.e.* the hydrogen gas obtained as an outlet gas from the separation device, may comprise small amounts of or residues of other compounds. These residues are preferably present in an amount of less than 10 vol.-%, more preferably less than 5 vol.-%, in particular less than 3 vol.-%. The residues may be referred to as "slipgas". If it is desirable for target applications of the hydrogen gas to eliminate the small amounts of other compounds, the hydrogen gas may be subjected to a purification. To that end, the device for the production of hydrogen gas and a solid carbon product selected from the group consisting of graphene, graphite and mixtures thereof may further comprise a purification apparatus. Preferably, the purification apparatus is arranged downstream of the separation apparatus. A feedback/recycle line may be present between either the separation apparatus or the purification apparatus and the at least one inlet for gas and/or the quenching means.

The present invention also provides a process for the production of hydrogen gas and a solid carbon product selected from the group consisting of graphene, graphite and mixtures thereof, wherein the process comprises the steps of: a) feeding an educt gas into a plasma section of a reactor in a direction different from the longitudinal axis of the reactor, b) converting the educt gas into a plasma having a temperature of more than 3,000 K by flowing the educt gas through an electric arc discharge between two hollow electrodes receiving a direct electric current, and c) quenching the plasma and/or gas obtained from the plasma with a cooling rate of more than 1,000 K/s from a temperature of more than 3,000 K to a temperature of below 3,000 K, wherein the educt gas comprises $CH_4$ and has an atomic H/C ratio of $\geq 4.0$.

The process according to the present invention may be a process for the production of hydrogen gas and a solid carbon product selected from the group consisting of graphene, graphite and mixtures thereof, wherein the process comprises the steps of: a) feeding an educt gas into a plasma section of a reactor in a direction different from the longitudinal axis of the reactor, b) converting the educt gas into a plasma having a temperature of more than 3,000 K by flowing the educt gas through an electric arc discharge between two hollow electrodes receiving a direct electric current, c) quenching the plasma and/or gas obtained from the plasma with a cooling rate of more than 1,000 K/s from a temperature of more than 3,000 K to a temperature of below 3,000 K and optionally further cooling the quenched plasma and/or gas in order to obtain a product comprising hydrogen gas and a solid carbon product, and d) separating the hydrogen gas and the solid carbon product from each other, wherein the educt gas comprises $CH_4$ and has an atomic H/C ratio of $\geq 4.0$.

The solid carbon product obtained by this process preferably has the same properties as described in the context of the inventive device before.

In a preferred embodiment, step a) in the process according to the present invention comprises feeding an educt gas tangentially into a plasma section of a reactor, preferably in a direction different from the longitudinal axis of the reactor and different from a radial direction of the reactor. This accounts for a flow profile within the reactor that promotes the desirable reactions of $CH_4$ to hydrogen and graphene and/or graphite. The educt gas is preferably fed in such a way that the pressure in the reactor is 10 bar or less, preferably 5 bar or less. The pressure in the reactor may preferably be from 1.05 bar to 10 bar, more preferably from 1.1 bar to 5.0 bar.

Step b) can be considered a core step of the process according to the present invention since a plasma is generated in this step. To generate a plasma from an educt gas with a volume rate of from 150 to 250 L/min, it is preferred to operate the two hollow electrodes with a power of between 50 and 150 kW. Step b) of the process according to the present invention may just as well comprise converting the educt gas into a plasma having a temperature of more than 4,000 K, preferably having a temperature in the range of 4,000 K to 6,000 K, by flowing the educt gas through an electric arc discharge between two hollow electrodes. Within the present invention, the temperature of the plasma refers to the average temperature of the plasma and/or gas. Therefore, the plasma and/or gas can be colder in certain areas, such as areas close to the reactor wall, whereas it can have higher temperature in vicinity to the core of the reactor, i.e. in vicinity to the longitudinal axis of the reactor. The average temperature of the plasma and/or gas can be determined from CFD simulations or can be estimated based on the energy input into the process, the mass streams and the heat capacities. The electric arc discharge between two hollow electrodes may be stabilized by stabilizing means. This is done in order to avoid that the electric arc discharge is interrupted completely, whereas it can be beneficial to provide a "dancing" electric arc discharge with foot points having a location that is constantly changing. Preferably, the direct current received by the two hollow electrodes is stabilized by means of an electromagnetic coil in a magnetic field.

Step c) of the process according to the present invention may comprise quenching the plasma and/or gas with a cooling rate of more than 5,000 K/s from a temperature of more than 4,000 K to a temperature of below 3,000 K, such as a temperature of below 1,500 K, for example a temperature from 900 K to 1,200 K, preferably with a cooling rate from 5,000 K/s to 20,000 K/s from a temperature in a range of 4,000 K and 6,000 K to a temperature of below 3,000 K, such as a temperature of below 1,500 K, for example a temperature from 600 K to 1,200 K, in particular by feeding cold hydrogen.

The plasma and/or gas may be quenched with a cooling rate of more than 5,000 K/s to a temperature of below 1,500 K, preferably to a temperature of below 1,200 K, more preferably to a temperature of below 1,000 K. Additional cooling steps may be provided subsequent to the quenching step. These optional cooling steps may serve to adjust the temperature to a range from 300 K to 500 K.

Preferably, the separated hydrogen from step d) is at least partially recycled and used as a part of the educt gas. It is further energetically preferred when the separated hydrogen from step d) is at least partially supplied to a gas-fired power plant including a combustor, a gas-fired steam turbine and a generator, a gas-fired combined cycle power plant, a gas engine, or a fuel cell. This contributes to a sustainable energy production and increases the efficiency of the process. Before recycling the hydrogen or supplying it to another device, it may be beneficial to purify the hydrogen gas by removing residues of other compounds, e.g. in a purification apparatus. In any case, the hydrogen which is obtained from the separation apparatus, is preferably compressed again.

It is noted that the educt gas does preferably not comprise Argon, preferably does not comprise Argon or Helium, more preferably does not comprise any noble gases. The educt gas is preferably the only gas which is converted into a plasma. No auxiliary gas or carrier gas is used.

The educt gas preferably comprises $CH_4$ and hydrogen and has an atomic H/C ratio of > 4.0, preferably of more than 5.0 and less than 25.0, more preferably of more than 4.0 and less than 10.0. The $CH_4$ may be $CH_4$ obtained from natural gas, biogas or flare gas. Depending on the source of the $CH_4$, a purification may have taken place in advance, such as a gas purification of natural gas, biogas or flare gas in order to remove carbon dioxide, nitrogen or sulfur.

It is further preferred that the heat generated by the process according to the present invention is subject to heat integration. For instance, it may be advantageous to use the excess heat from the process of the present invention to pre-heat educts for other processes, for example processes operated on the same site and/or in geographical vicinity to the present process.

Alternatively, the present invention provides a process for the production of hydrogen gas and a modified solid carbon product selected from the group consisting of doped graphene, doped graphite and mixtures thereof, wherein the process comprises the steps of a) feeding an educt gas into a plasma section of a reactor in a direction different from the longitudinal axis of the reactor, b) converting the educt gas into a plasma having a temperature of more than 3,000 K by flowing the educt gas through an electric arc discharge between two hollow electrodes receiving a direct electric current, and c) quenching the plasma with a cooling rate of more than 1,000 K/s from a temperature of more than 3,000 K to a temperature of below 3,000 K, wherein the educt gas comprises $CH_4$ and a dopant and has an atomic H/C ratio of $\geq$ 4.0, wherein the dopant is selected from the group consisting of diborane, silane, arsine, nitrogen, ammonia, hydrogen sulfide and mixtures thereof.

In the alternative embodiment, the process according to the present invention may be a process for the production of hydrogen gas and a modified solid carbon product selected from the group consisting of doped graphene, doped graphite and mixtures thereof, wherein the process comprises the steps of a) feeding an educt gas into a plasma section of a reactor in a direction different from the longitudinal axis of the reactor, b) converting the educt gas into a plasma having a temperature of more than 3,000 K by flowing the educt gas through an electric arc discharge between two hollow electrodes receiving a direct electric current, c) quenching the plasma with a cooling rate of more than 1,000 K/s from a temperature of more than 3,000 K to a temperature of below 3,000 K and optionally further cooling the quenched plasma and/or gas in order to obtain a product comprising hydrogen gas and a modified solid carbon product, d) separating the hydrogen gas and the modified solid carbon product from each other, wherein the educt gas comprises $CH_4$ and a dopant and has an atomic H/C ratio of $\geq$ 4.0, wherein the dopant is selected from the group consisting of diborane, silane, arsine, nitrogen, ammonia, hydrogen sulfide and mixtures thereof.

This alternative of the process allows for other compounds than just $CH_4$ and hydrogen in the educt gas. However, these other compounds are merely present as a dopant. The amount of the dopant is preferably not more than 20 vol.-%, more preferably more than 0.1 vol.-% to less than 15 vol.-%, in particular more than 1 vol.-% and less than 10 vol.-%. in the educt gas. The dopant can, thus, not be considered as a carrier gas.

By adding a dopant to the educt gas a modified solid carbon product, in particular a doped graphene or graphite, can be obtained. It is believed that doping is a particularly simple and effective modification method when it comes to the task of extending the applications of graphene. Applications of graphene doped with boron, nitrogen and other elements may be derived from Rao et al. "Synthesis, properties and applications of graphene doped with boron, nitrogen and other elements", Nano Today, vol. 9, 3, 2014, pp. 324-343. Doping graphene with heteroatoms (e.g. N, B and S) can change its electronic properties, magnetic properties and band structure. N-doped graphene is obtained with a dopant selected from the group consisting of nitrogen, ammonia, arsine, silane, hydrogen sulfide and mixtures thereof. P-doped graphene is obtained with a dopant such as diborane.

Last but not least, an idea of the present invention consists in the use of an educt gas comprising $CH_4$ and optional hydrogen as the only plasma forming gas in a process and a device for the production of hydrogen gas and a solid carbon product selected from the group consisting of graphene, graphite and mixtures thereof.

**Brief Description of the Drawings**

Embodiments of the present invention are illustrated by way of example and are not limited by the figures of the accompanying drawings in which identical references represent similar elements.

Fig. 1 is a schematic illustration of the device according to the present invention;

Fig. 2 is a schematic illustration of the reactor which is part of the device according to the present invention;

Fig. 3 is a flow diagram of the process according to the present invention;

Fig. 4 is a TEM image of the solid carbon product obtained in example process 1; and

Fig. 5 is a Raman spectrum of the solid carbon product obtained in example process 1 after an averaging procedure.

**Detailed Description of the Drawings and Examples**

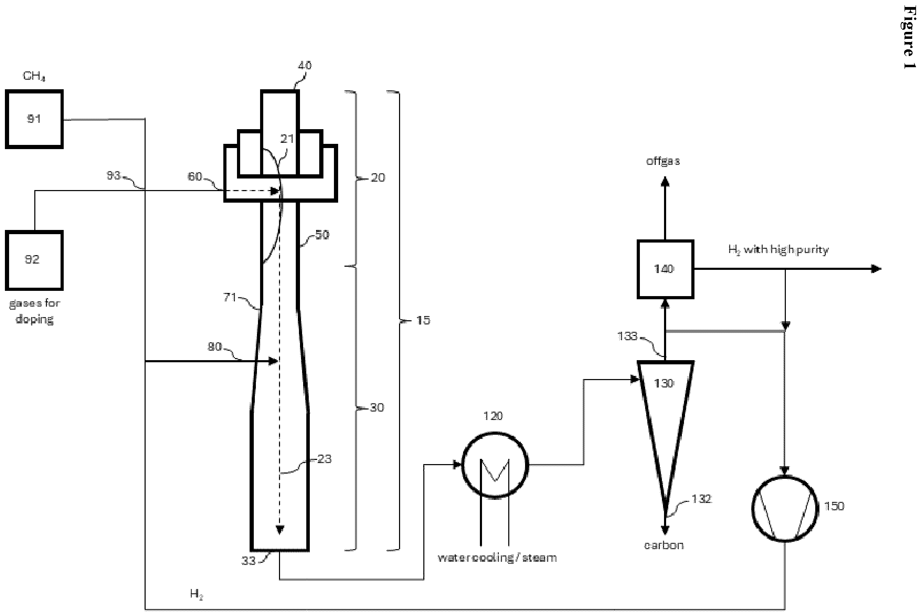

**Figure** 1 shows the details of an inventive device for the production of hydrogen gas and a solid carbon product selected from the group consisting of graphene, graphite and mixtures thereof. The device comprises a reactor 15 configured to generate an electric arc discharge 21. The device further comprises a reservoir 91 from which $CH_4$ for the educt gas is taken. For the production of doped graphene/ graphite, the device further comprises a reservoir 92 from which the dopant is taken. The device may also have a mixing point 93 at which the $CH_4$ is mixed with recycled hydrogen and - when used - dopant.

The reactor 15 comprises a plasma section 20, and a second reactor section 30 directly following the plasma section of the reactor in the flow direction of the main stream 23. The plasma section comprises an anode 50 and a cathode 40 for generating an electric arc discharge 21, wherein the arc extends within the plasma section 20. Furthermore, there is a gap between the anode 50 and the cathode 40. In this gap a gas inlet 60 is arranged for introducing an educt gas into the plasma section 20 of the reactor 15.

The reactor 15 further comprises a second reactor section 30 downstream of the plasma section 20. The second reactor section 30 comprises a quenching means at a position where a feed line 80 for cold hydrogen ends. Additionally, the second reactor section comprises outlet means 33 for discharging components.

Last but not least, reference number 71 marks a point, downstream of which there is a slow conical expansion of the reactor 15. The cross section of the reactor 15 is expanding downstream of point 71 in a continuous fashion and without stepped portions.

In addition to the reactor 15, the device for the production of hydrogen gas and a solid carbon product selected from the group consisting of graphene, graphite and mixtures thereof comprises a separation apparatus 130, and a purification apparatus 140. When the reactor 15 is operated, it produces a stream which contains significant amounts of hydrogen and a solid carbon product, especially graphene and/or graphite. This stream is supplied to the apparatus 130 for separating solid carbon from hydrogen in order to obtain an outlet stream 133 with reduced amount of solid carbon and a solid outlet stream 132. The solid content in the outlet stream 133 with reduced amount of solid carbon is less than 1.0 wt.-%. The stream 133 with reduced amount of solid carbon may then be divided into a first part which may be recycled and a second part which may be supplied to a purification apparatus 140. The apparatus 140 may be a PSA-unit, i.e. it may comprise at least two adsorber beds (not shown) and serves to create a stream with higher purity in hydrogen.

Between the reactor outlet 33 and the separation apparatus 130, the device may further comprise an additional cooling means, for example a heat exchanger 120. The heat exchanger is operated with a cooling fluid, preferably water/ steam, which may subsequently be used for district heating or electricity generation.

In order to recycle hydrogen (hydrogen from the stream 133 with reduced amount of solid carbon and/or hydrogen from the stream with higher purity in hydrogen released from the purification apparatus 140) the recycle stream is passed through a compressor 150. In order words, when the hydrogen is partially recycled, the device further comprises a compressor 150.

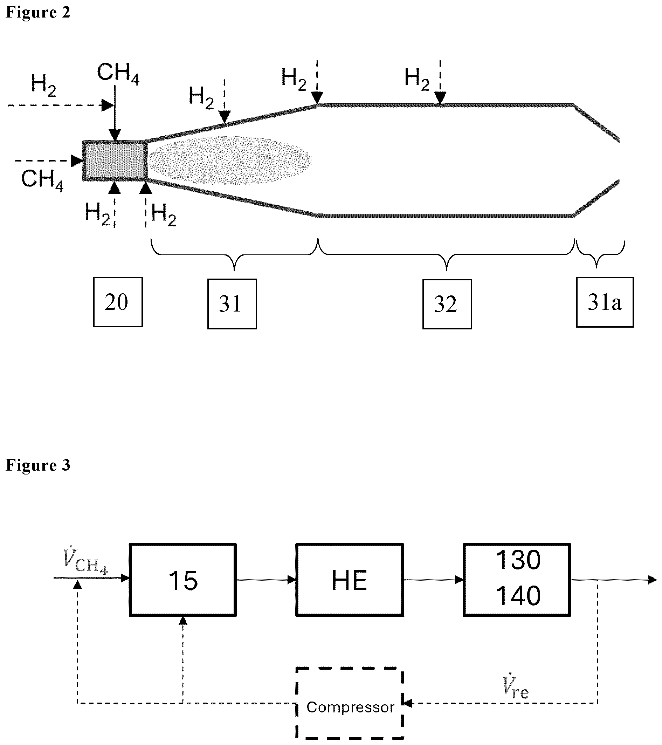

**Figure** 2 is a schematic illustration of the reactor 15. The energy input for the process in which hydrogen and graphene/graphite are formed, takes place in the plasma section 20 of the reactor. The educt gas is fed evenly and tangentially through an annular gap between a hollow cathode and a hollow anode. The electric arc discharge is extended along the longitudinal axis by the dynamic forces of the educt gas feed. At the same time, the magnetic force which is caused by the electric current acts against this longitudinal extension and limits the length and fluctuation of the arc.

Care must be taken to ensure that the foot points of the arc on the inner surface of the electrodes are constantly changing their position. Otherwise the electrode walls, which are only cooled by demineralized water, are prone to be damaged. A constant change in the position of the foot points is realized by the dragging effect of the rotating gas flow which is due to the tangential supply of the educt gas. Thus, the foot points of the arc rotate in the same way as the fluid introduced via the gas inlet. The arc is further stabilized by a magnetic field strength of 0-2 Tesla generated by an electromagnetic coil in the cathode area. The exact position and magnetic strength of the electromagnetic coil can be adjusted.

The outlet of the hollow anode is located near the downstream reactor sections 31 and 32. Metals, electrically conductive ceramics or graphite can be used as material for the hollow cathode and the hollow anode.

The educt gas used for the graphene/graphite synthesis is the only gas which is converted into a plasma. No auxiliary gas or carrier gas, such as argon or helium, is used. Methane alone or a mixture of methane and hydrogen can be used as the educt gas. The amount of hydrogen in the educt gas can be in a range from 1 vol.% to 95 vol.%.

The educt gas is fed directly into the plasma section of the reactor between the two electrodes. If a gas mixture with hydrogen is used as the educt gas, the methane can be mixed with hydrogen either before the gas mixture is introduced into the plasma section of the reactor and/or within the plasma section and/or at the outlet of the plasma section. If the gases are mixed before being introduced into the plasma section, one gas inlet into the plasma section may be sufficient, for example the gas inlet which is arranged in the gap between the hollow electrodes. Furthermore, if the gases are mixed before being introduced into the plasma section, high amounts of hydrogen gas may be preferred. When mixing the methane or methane-hydrogen mixture with (additional) hydrogen in the plasma section, at least two gas inlets are required. In these cases, it is preferred that methane or a methane-hydrogen mixture is fed into the plasma section via the at least one gas inlet arranged in the gap between the hollow electrodes. A separate hydrogen feed may be introduced into the reactor upstream from the at least one gas inlet for example via the at least one further gas inlet.

The downstream reactor sections 31 and 32 together form the second reactor section 30. In one of these sections, the plasma (indicated by a grey-shaded area) and/or gas obtained from the plasma is quenched with hydrogen. Both sections 31 and 32 are downstream of and adjacent to plasma section 20. The first one of the downstream reactor sections, i.e. the downstream reactor section 31, has a conical expansion. The reactor section 31 has a lining comprising or consisting of graphite, graphite coated with pyrolytic carbon or glassy carbon at the connection to the arc area. If no quenching means is provided in the section 31, the lining may extend to the beginning of section 32. However, it can also even extend further and to the end of the cylindrical section 32. If a quenching means is provided in reactor section 31, the lining extends at least to the quenching means, i.e. the gas inlet for cold hydrogen.

Cold hydrogen can be fed at several optional positions along the reactor length for quenching of the plasma and/or gas and optionally for subsequent cooling of the gas.

Hydrogen for quenching is only supplied at one reactor length. The position of the at least one gas inlet for quenching can be either located in reactor section 31 or in reactor section 32. If quenching is done with hydrogen, the hydrogen temperature and the quench gas flow are set so that high quench rates of at least $10^3$ K/s, in particular of at least $10^4$ K/s, are achieved. The one or more inlets for gas, that are responsible for quenching, can be perpendicular to the main flow direction of the gas or at an angle $-80° \leq \alpha \leq 80°$ to the perpendicular orientation.

Additional hydrogen for cooling can be supplied in reactor section 31 and/or in reactor section 32, preferably in reactor section 32 only. In order to cool the quenched gas, hydrogen can be supplied at several lengths of the reactor.

Section 32 is followed by a tapering section 31a, which leads to a narrowing of the reactor cross section. The internal diameter at the outlet 33 of section 31a corresponds to the internal diameter of the downstream arranged pipe. This is selected so that a sufficiently high gas velocity is ensured for the transport of the graphite/graphene particles up to the separation apparatus 130.

**Figure** 3 is a flow diagram of the process according to the present invention. Between the reactor 15 and the setup comprising the separation apparatus 130 and the purification apparatus 140 a component HE may be arranged. The component HE may be a pipeline making a connection between the reactor 15 and the downstream units or may comprise a heat exchanger for cooling the reaction products, i.e. the hydrogen and the graphene/graphite.

The hydrogen that is obtained in the purification apparatus 140 can optionally be recycled. A portion of the hydrogen product, such as a volumetric rate $\dot{V}_{re}$, can be compressed and fed back to one of the gas inlets of the device. This also prevents the accumulation of other gas components that could be formed as by-products during the reaction.

**Example Process 1**

An example process 1 for the production of hydrogen gas and a solid carbon product selected from the group consisting of graphene, graphite and mixtures thereof was carried out by feeding 180 L/min pure methane into a plasma section of a reactor in a direction different from the longitudinal axis of the reactor. The hollow electrodes in the plasma section constantly received a power of 61 kW as a direct electrical current. When flowing the educt gas through the electric arc discharge between two hollow electrodes a plasma having a temperature of about 3,300 °C was created. The plasma was then quenched with a cooling rate of about 8,000 K/s and the quenched gas was then cooled to a temperature of about 60 °C in order to obtain a product comprising hydrogen gas and a solid carbon product. The hydrogen gas and the solid carbon product were separated from each other and analyzed with TEM and Raman

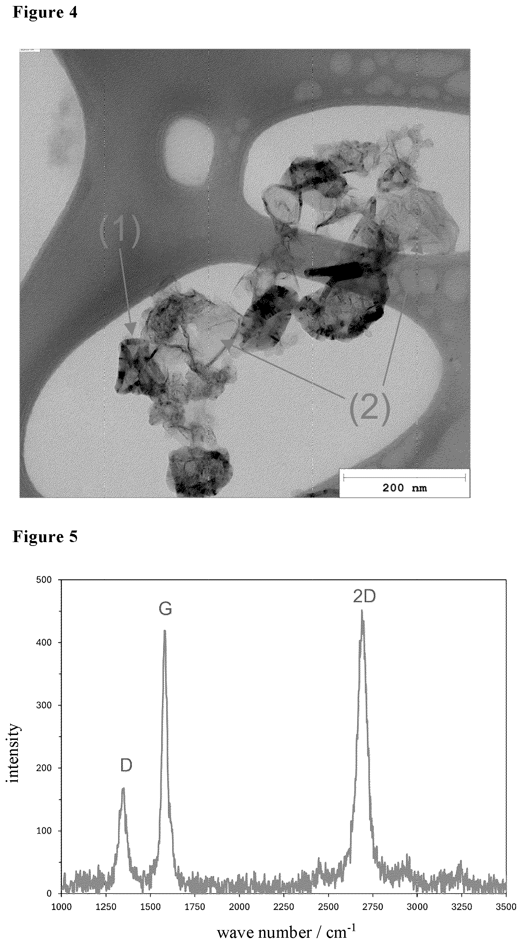

**Figure** 4 is a TEM image of the solid carbon product that has been obtained. The part of the solid carbon product which has a graphite configuration is marked with "(1)". The other part of the solid carbon product which is marked with "(2)" is graphene. The graphite as well as the graphene portion of the solid carbon product have dimensions which are much smaller than 5 μm.

**Figure** 5 is a spectrum that has been obtained by averaging the Raman spectra of eight different samples of the solid carbon product. The averaging was done with the aim of reducing sampling effects. Each of the eight Raman spectra has been obtained at a laser wavelength of 532 nm and with a laser spot diameter of 5 μm. Compared to the dimensions of the graphite and graphene particles shown in figure 4, the laser spot diameter is large which may explain the appearance of a defect peak "D". Apart from that, the almost equal intensity of the peaks "G" and "2D" indicates that graphene in the form of FLG (few layer graphene) and a certain amount of graphite has been obtained in example process 1.

**Claims**

1. Device for the production of hydrogen gas and a solid carbon product selected from the group consisting of graphene, graphite and mixtures thereof, wherein the device comprises

   a reactor having:

   i) a plasma section, wherein the plasma section comprises at least one inlet for gas that extends into a direction different from the longitudinal axis of the reactor, and wherein the plasma section further comprises at least two hollow electrodes configured to receive a direct electric current and generate an electric arc discharge between them, and
   ii) a quenching means downstream from the plasma section, wherein the quenching means is configured to cool a plasma and/or gas from a temperature of more than 3,000 K with a cooling rate of more than 1,000 K/s to a temperature of below 3,000 K, and

   wherein the device further comprises a separation apparatus downstream from the reactor, wherein the separation apparatus is configured to separate a solid carbon product from a hydrogen gas.

2. Device according to claim 1, wherein the at least one inlet for gas is a tangential inlet, wherein the tangential inlet preferably is an inlet extending into a direction different from a radial direction of the reactor.

3. Device according to claim 1 or 2, wherein at least one inlet is arranged in a gap between the hollow electrodes, and wherein optionally at least one further inlet is arranged at a position upstream of both electrodes.

4. Device according to any of the preceding claims, wherein the quenching means comprises or consists of a heat exchanger and/or one or more inlets for gas, wherein, when the quenching means comprises or consists of two or more inlets for gas, the two or more inlets for gas are arranged on a circumference along the same length of the reactor.

5. Device according to any of the preceding claims, wherein the cross section of the reactor is constant, tapering and/or expanding between the end point of the plasma section and the downstream end of the reactor, wherein, when the cross section is tapering and/or expanding, it is preferably continuously tapering and/or expanding, more preferably without stepped portions.

6. Device according to any of the preceding claims, wherein the quenching means is configured to cool a plasma and/or gas from a temperature of more than 4,000 K, preferably from a temperature in a range of 4,000 K and 6,000 K, with a cooling rate of more than 5,000 K/s, preferably with a cooling rate from 5,000 K/s to 20,000 K/s.

7. Device according to any of the preceding claims, wherein the at least two hollow electrodes are electrodes made of a material selected from the group consisting of metal, metal alloy, electrically conductive ceramic, carbon and mixtures thereof.

8. Process for the production of hydrogen gas and a solid carbon product selected from the group consisting of graphene, graphite and mixtures thereof, wherein the process comprises the steps of:

   a) feeding an educt gas into a plasma section of a reactor in a direction different from the longitudinal axis of the reactor,
   b) converting the educt gas into a plasma having a temperature of more than 3,000 K by flowing the educt gas through an electric arc discharge between two hollow electrodes receiving a direct electric current,
c) quenching the plasma and/or gas obtained from the plasma with a cooling rate of more than 1,000 K/s from a temperature of more than 3,000 K to a temperature of below 3,000 K and optionally further cooling the quenched plasma and/or gas in order to obtain a product comprising hydrogen gas and a solid carbon product,
d) separating the hydrogen gas and the solid carbon product from each other,

wherein the educt gas comprises $CH_4$ and has an atomic H/C ratio of $\geq 4.0$.

9. Process for the production of hydrogen gas and a modified solid carbon product selected from the group consisting of doped graphene, doped graphite and mixtures thereof, wherein the process comprises the steps of:

a) feeding an educt gas into a plasma section of a reactor in a direction different from the longitudinal axis of the reactor,
b) converting the educt gas into a plasma having a temperature of more than 3,000 K by flowing the educt gas through an electric arc discharge between two hollow electrodes receiving a direct electric current,
c) quenching the plasma and/or gas obtained from the plasma with a cooling rate of more than 1,000 K/s from a temperature of more than 3,000 K to a temperature of below 3,000 K and optionally further cooling the quenched plasma and/or gas in order to obtain a product comprising hydrogen gas and a modified solid carbon product,
d) separating the hydrogen gas and the modified solid carbon product from each other,

wherein the educt gas comprises $CH_4$ and a dopant and has an atomic H/C ratio of $\geq 4.0$, wherein the dopant is selected from the group consisting of diborane, silane, arsine, nitrogen, ammonia, hydrogen sulfide and mixtures thereof.

10. Process according to claim 8 or 9, wherein step a) comprises feeding an educt gas tangentially into a plasma section of a reactor, preferably in a direction different from the longitudinal axis of the reactor and different from a radial direction of the reactor.

11. Process according to any of claims 8 to 10, wherein step b) comprises converting the educt gas into a plasma stream having a temperature of more than 4,000 K, preferably having a temperature in the range of 4,000 K to 6,000 K, by flowing the educt gas through an electric arc discharge between two hollow electrodes.

12. Process according to any of the claims 8 to 11, wherein step c) comprises quenching the plasma and or gas obtained from the plasma with a cooling rate of more than 5,000 K/s from a temperature of more than 4,000 K to a temperature of below 3,000 K, such as a temperature of below 1,500 K, preferably with a cooling rate from 5,000 K/s to 20,000 K/s from a temperature in a range of 4,000 K and 6,000 K to a temperature of below 3,000 K, such as a temperature of below 1,500 K, in particular by feeding cold hydrogen.

13. Process according to any of the claims 8 to 12, wherein the separated hydrogen from step d) is at least partially recycled and used as a part of the educt gas and/or
wherein the separated hydrogen from step d) is at least partially supplied to a gas-fired power plant including a combustor, a gas-fired steam turbine and a generator, a gas-fired combined cycle power plant, a gas engine, or a fuel cell.

14. Process according to any of the claims 8 to 13, wherein the educt gas does not comprise Argon, preferably does not comprise Argon or Helium, more preferably does not comprise any noble gases.

15. Process according to any of the claims 8 to 14, wherein the educt gas comprises $CH_4$ and hydrogen and has an atomic H/C ratio of > 4.0, preferably of more than 5.0 and less than 25.0, more preferably of more than 4.0 and less than 10.0.

**Figure 1**

Figure 2

| 20 | 31 | 32 | 31a |

Figure 3

**Figure 4**

**Figure 5**

Europäisches
Patentamt
European
Patent Office
Office européen
des brevets

# EUROPEAN SEARCH REPORT

**Application Number**

EP 25 15 4336

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2014/227165 A1 (HUNG CHENG-HUNG [US] ET AL) 14 August 2014 (2014-08-14) | 1,4-6,8, 9,11-15 | INV. C01B3/24 |
| Y | * paragraph [0038] - paragraph [0062] * ----- | 2,3,7,10 | |
| Y | US 2004/045808 A1 (FABRY FREDERIC [FR] ET AL) 11 March 2004 (2004-03-11) * paragraphs [0012], [0018] * ----- | 2,7,10 | |
| Y | US 11 304 288 B2 (MONOLITH MAT INC) 12 April 2022 (2022-04-12) * column 4; figure 1 * ----- | 3 | |
| A | EP 3 718 964 B1 (UNIPER KRAFTWERKE GMBH [DE]) 1 December 2021 (2021-12-01) * the whole document * ----- | 1-15 | |

**TECHNICAL FIELDS SEARCHED (IPC)**

C01B
B01J
C01C

The present search report has been drawn up for all claims

| Place of search | Date of completion of the search | Examiner |
|---|---|---|
| Munich | 25 June 2025 | Riesen, Jörg |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

.................................................................................

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 25 15 4336

This annex lists the patent family members relating to the patent documents cited in the above-mentioned European search report.
The members are as contained in the European Patent Office EDP file on
The European Patent Office is in no way liable for these particulars which are merely given for the purpose of information.

25-06-2025

| Patent document cited in search report | | Publication date | Patent family member(s) | | Publication date |
|---|---|---|---|---|---|
| US 2014227165 | A1 | 14-08-2014 | BR | 112014007540 B1 | 29-12-2020 |
| | | | CA | 2850515 A1 | 04-04-2013 |
| | | | CN | 104010965 A | 27-08-2014 |
| | | | DK | 2760788 T3 | 19-06-2023 |
| | | | EP | 2760788 A1 | 06-08-2014 |
| | | | EP | 4206127 A2 | 05-07-2023 |
| | | | JP | 5943438 B2 | 05-07-2016 |
| | | | JP | 2014528897 A | 30-10-2014 |
| | | | KR | 20140089526 A | 15-07-2014 |
| | | | LT | 2760788 T | 26-06-2023 |
| | | | MX | 341013 B | 03-08-2016 |
| | | | PL | 2760788 T3 | 14-08-2023 |
| | | | RU | 2014117529 A | 10-11-2015 |
| | | | US | 2013084236 A1 | 04-04-2013 |
| | | | US | 2013084237 A1 | 04-04-2013 |
| | | | US | 2014227165 A1 | 14-08-2014 |
| | | | WO | 2013049498 A1 | 04-04-2013 |
| US 2004045808 | A1 | 11-03-2004 | AT | E310054 T1 | 15-12-2005 |
| | | | AU | 1393802 A | 02-04-2002 |
| | | | AU | 2002213938 B2 | 30-03-2006 |
| | | | BR | 0113976 A | 29-07-2003 |
| | | | CN | 1458966 A | 26-11-2003 |
| | | | DE | 60024084 T2 | 03-08-2006 |
| | | | DK | 1188801 T3 | 03-04-2006 |
| | | | EA | 200300389 A1 | 25-12-2003 |
| | | | EP | 1188801 A1 | 20-03-2002 |
| | | | ES | 2254089 T3 | 16-06-2006 |
| | | | JP | 2004510014 A | 02-04-2004 |
| | | | KR | 20030046455 A | 12-06-2003 |
| | | | MY | 137071 A | 31-12-2008 |
| | | | TW | I285666 B | 21-08-2007 |
| | | | UA | 77162 C2 | 15-11-2006 |
| | | | US | 2004045808 A1 | 11-03-2004 |
| | | | US | 2009142250 A1 | 04-06-2009 |
| | | | WO | 0224819 A1 | 28-03-2002 |
| US 11304288 | B2 | 12-04-2022 | BR | 112016017429 A2 | 08-08-2017 |
| | | | CA | 2937909 A1 | 06-08-2015 |
| | | | CN | 105940774 A | 14-09-2016 |
| | | | CN | 110505745 A | 26-11-2019 |
| | | | EP | 3100597 A2 | 07-12-2016 |
| | | | ES | 2954251 T3 | 21-11-2023 |
| | | | FI | 3100597 T3 | 07-09-2023 |
| | | | JP | 6765305 B2 | 07-10-2020 |
| | | | JP | 2017510934 A | 13-04-2017 |

EPO FORM P0459

For more details about this annex : see Official Journal of the European Patent Office, No. 12/82

page 1 of 2

## ANNEX TO THE EUROPEAN SEARCH REPORT
## ON EUROPEAN PATENT APPLICATION NO.

EP 25 15 4336

25-06-2025

| Patent document cited in search report | Publication date | Patent family member(s) | | Publication date |
|---|---|---|---|---|
| | | JP | 2020205279 A | 24-12-2020 |
| | | KR | 20160114174 A | 04-10-2016 |
| | | MX | 392456 B | 19-03-2025 |
| | | PL | 3100597 T3 | 23-10-2023 |
| | | RU | 2016135213 A | 05-03-2018 |
| | | RU | 2020134613 A | 13-11-2020 |
| | | US | 2015223314 A1 | 06-08-2015 |
| | | US | 2022272826 A1 | 25-08-2022 |
| | | WO | 2015116943 A2 | 06-08-2015 |
| EP 3718964 B1 | 01-12-2021 | CA | 3135308 A1 | 08-10-2020 |
| | | CN | 113825722 A | 21-12-2021 |
| | | EP | 3718964 A1 | 07-10-2020 |
| | | JP | 7561762 B2 | 04-10-2024 |
| | | JP | 2022527864 A | 06-06-2022 |
| | | KR | 20210148275 A | 07-12-2021 |
| | | US | 2022212923 A1 | 07-07-2022 |
| | | WO | 2020201356 A1 | 08-10-2020 |

EPO FORM P0459

page 2 of 2

# EP 4 782 393 A1

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- EP 3718964 A
- WO 2015189643 A1
- EP 0104359 A

### Non-patent literature cited in the description

- **DIAB et al.** Why Turquoise Hydrogen will be a game changer for the energy transition. *International Journal of Hydrogen Energy*, 2022, vol. 47 (61)
- **A. FRIDMAN**. Plasma Chemistry. Cambridge University Press, 2009
- **M. I. BOULOS**. *Thermal Plasmas, Fundamentals and Applications*, 1994, vol. 1
- **HEIβL et al.** Substitution of ThO2 by La2O3 additions in tungsten electrodes for atmospheric plasma spraying. *International Journal of Refractory Metals and Hard Materials*, 2014, vol. 43, 181-185
- **CHAU et al.** Experimental study on copper cathode erosion rate and rotational velocity of magnetically driven arcs in a well-type cathode non-transferred plasma torch operating in air. *Journal of Physics D: Applied Physics*, 2007, vol. 40 (7), 1944-1952
- **RAO et al.** Synthesis, properties and applications of graphene doped with boron, nitrogen and other elements. *Nano Today*, 2014, vol. 9 (3), 324-343